Europäisches Patentamt

European Patent Office

Office européen des brevets

(19)

(11) Numéro de publication : **0 148 079**
**B1**

(12) **FASCICULE DE BREVET EUROPÉEN**

(45) Date de publication du fascicule du brevet :
25.03.87

(21) Numéro de dépôt : **84402681.5**

(22) Date de dépôt : **20.12.84**

(51) Int. Cl.⁴ : **B 65 B 25/06**, A 23 C 19/097,
B 65 D 85/76

(54) **Procédé de fabrication et d'emballage ainsi que moyen d'emballage allongeant la durée de conservation des fromages à pâte molle.**

(30) Priorité : **23.12.83 FR 8320699**

(43) Date de publication de la demande :
**10.07.85 Bulletin 85/28**

(45) Mention de la délivrance du brevet :
**25.03.87 Bulletin 87/13**

(84) Etats contractants désignés :
**AT BE CH DE FR GB IT LI LU NL SE**

(56) Documents cités :
**DE-C- 941 708
FR-A- 325 958
FR-A- 644 532
FR-A- 1 086 294
FR-A- 2 012 286
FR-A- 2 211 927**

(73) Titulaire : **SAINT-HUBERT Industrie Laitière
870, rue Denis-Papin Zone Industrielle
F-54710 Ludres Meurthe-et-Moselle (FR)**

(72) Inventeur : **Authelet, Marc
1, rue Viriot, Bât.A
F-54510 Laneuveville Dt Nancy (FR)**
Inventeur : **Perrin, Jean
4, Allée Jean-Jaurès
F-54510 Tomblaine (FR)**

(74) Mandataire : **Chevallier, Robert Marie Georges
Cabinet BOETTCHER 23, rue La Boétie
F-75008 Paris (FR)**

## Description

L'invention a pour objet un procédé de fabrication et d'emballage des fromages à pâte à croûte fleurie ou lavée qui en allonge la durée de conservation avant leur consommation. Par allongement de la conservation, il faut comprendre ici plus exactement la « durée de vie » du fromage pendant laquelle son évolution est telle qu'il conserve son aspect habituel avec une fleur à l'apparence normale, quand il s'agit d'un fromage à croûte fleurie, sa souplesse et surtout sa qualité au point de vue gustatif, si bien qu'il peut être consommé en donnant toute la satisfaction qu'on peut en attendre.

Quand un fromage de ce type, comme un brie ou un camembert, est fabriqué conformément aux méthodes fromagères classiques et emballé de la manière habituelle, sa durée de vie est relativement courte. Par exemple, la durée normale courante de conservation d'un fromage, fabriqué et emballé de la manière classique (en papier d'aluminium, en boîte en bois ou en carton, etc.) est de 45 jours environ à une température de 4 à 6 °C. Or, pour qu'ils puissent être exportés au loin, il faudrait conserver les fromages pendant 3 à 4 mois, sans altération ni de l'apparence, ni de la texture, ni des qualités organoleptiques.

On a pensé pouvoir surmonter ces difficultés en emballant les fromages dans les boîtes étanches, en métal ou en matière plastique, et en leur faisant subir, après emballage, une stérilisation à une température de 100 à 200 °C afin d'en bloquer l'évolution pendant plusieurs mois. Or, le résultat auquel on parvient ainsi n'est pas satisfaisant. La croûte du fromage est lavée ; elle perd sa fleur et sa teinte change en tendant à devenir rouge, de sorte que le fromage n'est plus attirant pour le consommateur rien que par son apparence, sans parler de sa qualité qui est également altérée.

Par ailleurs, l'état de la technique dans ce domaine est illustré par les documents résumés ci-dessous.

Le brevet FR-A-325 958 préconise d'envelopper le fromage non fermenté dans une feuille d'étain, de l'enfermer ainsi dans une boîte hermétique, de le stériliser à 100 °C ou plus, de percer ensuite la boîte pour en faire sortir l'air et les vapeurs, d'obturer ce trou. L'expérience montre qu'une feuille étanche contenant le fromage produit un lavage qui élimine la fleur et donne à la croûte une coloration rougeâtre, comme on l'a dit plus haut.

Le brevet FR-A-1 086 294 décrit un procédé selon lequel on élève l'acidité du caillé à partir d'une valeur de pH 6,1 jusqu'à une valeur comprise entre pH 5,9 et pH 5,5, de préférence pH 5,5, en y ajoutant du sel de préférence sous forme de saumure ayant une teneur en sel de 2 à 4 % en poids pouvant atteindre 6 % en poids ou même 12 %. Ce procédé vise essentiellement le fromage américain dit Cheddard avec l'intention de lui donner une humidité finale plus élevée.

Le brevet FR-A-644 532 se rapporte à un emballage composite comprenant une première feuille en fibres de cellulose non tissées et une seconde feuille mince en aluminium, réunies par collage. Il s'agit d'un emballage pour produits manufacturés pouvant être lui-même utilisé pour la réalisation d'articles comme des tentures, des boîtes, certains vêtements.

Le brevet FR-A-2 211 927 concerne une boîte d'emballage réalisée en carton enduit de matière plastique, de préférence de polypropylène, avec un opercule en carton revêtu sur une face d'une couche de polypropylène permettant son soudage par la chaleur sur le bord supérieur de la boîte. L'emploi indiqué de cette boîte est de permettre le réchauffage dans un four à micro-ondes des produits alimentaires qui y ont été conservés dans une ambiance froide.

L'invention a pour but principal d'apporter un procédé de fabrication et d'emballage des fromages considérés ici, qui en allonge considérablement la durée de vie au sens expliqué plus haut, en lui conservant toutes ses qualités.

L'invention concerne, et a aussi pour but, d'apporter des moyens matériels économiques d'emballage de ces fromages dans le cadre du procédé.

La fabrication d'un fromage comprend une succession d'opérations bien connues que l'on ne rappellera pas ici en totalité.

Après adjonction de présure, qui se fait traditionnellement à 32-34 °C et qui provoque la floculation de la caséine, on obtient le caillé que l'on soumet ensuite à une opération de tranchage avant la mise en moule ; dans le moule le caillé est égoutté et il prend sa forme définitive ; après le moulage ont lieu les opérations d'acidification, de salage, d'ensemencement en Pénicillium qui produit la fleur superficielle en une durée initiale de 9 à 11 jours, après quoi le fromage passe par l'opération d'affinage pendant laquelle il est retourné plusieurs fois à intervalles réguliers au cours d'une période qui est habituellement de trois semaines au moins à une température de 7 à 10 °C.

Quand le fromage est arrivé à cet état final, selon le procédé de l'invention on l'enveloppe dans un emballage mixte comprenant deux couches superposées, une couche intérieure absorbante de l'humidité qui est mise directement au contact du fromage, sans opération préparatoire quelconque ; une couche extérieure étanche qui enveloppe la couche intérieure. On enferme le fromage ainsi emballé dans une boîte étanche que l'on ferme hermétiquement, sans aucune adjonction et sans opération préparatoire quelconque ; ensuite on soumet cette boîte à une opération, connue en soi, de pasteurisation à la chaleur à une température suffisante qui est de préférence de 100 °C pendant une durée de 50 minutes. En pratique, la boîte dans laquelle est enfermée le fromage baigne dans de l'eau chauffée tenue sous une pression de 0,5 bar au-dessus de la pression atmosphérique. Cette pression s'oppose au gonflement de la boîte sous l'effet du chauffage, de sorte que cette boîte conserve après refroidissement son apparence initiale.

L'emballage mixte peut être composé de deux feuilles distinctes dans lesquelles on enveloppe successivement le fromage. L'emballage mixte peut aussi être une feuille composite unique obtenue par le collage l'une à l'autre par un moyen approprié quelconque acceptable (colle à haute température, soudure à la chaleur, etc.) de deux feuilles ayant chacune respectivement les propriétés indiquées ci-dessus.

De nombreuses matières diverses peuvent être employées dans le cadre de l'invention, mais il est grandement préférable de se servir comme feuille extérieure étanche d'une feuille mince en aluminium et comme feuille intérieure absorbante d'une feuille en fibres de cellulose, non tissées. Ces deux feuilles peuvent être réunies avantageusement, par collage avec une colle résistante à une température de 130 °C au moins, de préférence une colle à base de caséinate, en une feuille composite ayant par exemple un poids de 35 g/m². Ainsi le fromage est enveloppé en une seule opération à l'intérieur des deux feuilles.

Des considérations analogues s'appliquent au choix de la matière qui constitue la boîte. Une boîte en métal à couvercle serti après mise en place du fromage enveloppé comme on vient de le dire, peut convenir si elle a été préalablement dégraissée de manière parfaite. Mais, ainsi qu'on le sait, la fabrication des boîtes métalliques s'accompagne toujours d'une contamination volontaire ou involontaire de leur surface par de la graisse ; un dégraissage parfait étant difficile d'une part, et jamais certain d'autre part, on recouvre couramment la face intérieure des boîtes métalliques pour conserve d'une couche de vernis. Mais, ce dernier fait courir le risque de contaminer le fromage par une odeur étrangère pendant l'opération de pasteurisation et pendant la durée de vie du fromage.

Par conséquent, si on ne dispose pas d'un métal parfaitement dégraissé, ou d'un vernis rigoureusement inerte, il est préférable de se servir d'une boîte en matière plastique résistante à 130 °C, par exemple une boîte en polypropylène moulé par injection.

Une boîte préférée dans le cadre de l'invention comprend une feuille en carton incluse en totalité entre deux couches de polypropylène transparent moulé par injection. Le carton peut être imprimé avant le moulage du polypropylène et porter sur sa face extérieure toutes les inscriptions souhaitées.

Une boîte de ce genre apporte encore l'avantage de permettre la réalisation facile de sa fermeture hermétique. On utilise un opercule complexe composé d'une feuille d'aluminium ou de carton revêtue sur une face au moins d'une couche de polypropylène. Cet opercule se fixe par thermosoudage à 230 °C sur le bord supérieur libre de la boîte, polymère contre polymère, en 1,5 seconde environ.

Il a été constaté qu'un fromage enveloppé, emballé et pasteurisé, par exemple à 100 °C pendant 50 mn, comme on vient de l'expliquer, ne subit pas d'évolution pendant 6 mois au moins. Plus précisément, s'il se produit une évolution pendant cette durée, elle est suffisamment lente pour qu'au terme de ces six mois il conserve son apparence initiale de fraîcheur, avec une fleur subsistante pratiquement inchangée, à peine quelques traces rougeâtres dans le cas le plus mauvais, avec la même souplesse de la texture et la même qualité au point de vue gustatif.

Sans pouvoir expliquer totalement le phénomène, on croit que la feuille intérieure absorbante, en non tissé par exemple, absorbe la vapeur d'eau qui se dégage du fromage, notamment pendant l'opération de pasteurisation. La feuille extérieure étanche s'oppose à la fuite de cette vapeur d'eau si bien que le fromage, se refroidissant après l'opération de pasteurisation, est tenu dans une atmosphère qui empêche son dessèchement mais qui ne présente pas non plus d'accumulation localisée d'eau puisque celle-ci est contenue et répartie dans toute l'épaisseur de la feuille intérieure absorbante.

Des essais minutieux et prolongés ont montré que l'eau sort du fromage à 100 °C, d'une manière plutôt brutale ; la couche absorbante l'absorbe au fur et à mesure ce qui élimine le risque de lavage de la croûte et la disparition de la fleur. Ensuite, pendant le refroidissement, la couche absorbante restitue lentement, par capillarité, l'eau au fromage ce qui évite encore le lavage de la croûte ainsi que le dessèchement du fromage.

Il a été constaté en outre, qu'il est grandement souhaitable d'apporter au processus traditionnel de fabrication du fromage à pâte molle et à croûte fleurie, une modification qui favorise et qui rend plus sûrement efficace le procédé décrit ci-dessus. Ce procédé est efficace, ainsi qu'on l'a écrit, mais les modifications que l'on expliquera ci-dessous ont pour effet de mettre le fromage dans un état qui le prépare à mieux supporter le procédé et à conserver de manière plus totale toutes ses qualités après l'application de ce procédé. En outre, ces modifications ont encore l'avantage qu'elles diminuent notablement la durée de l'affinage naturel. Avec ces modifications, l'opération de pasteurisation effectuée dans les conditions expliquées plus haut devient en quelque sorte une partie du processus de l'affinage traditionnel.

Les modifications apportées au processus traditionnel, dans le cadre de la présente invention, sont les suivantes :

l'adjonction de la présure est effectuée à une température de 38-39 °C au lieu de 32-34 °C,

après le tranchage du caillé on ajoute à ce caillé de l'eau faiblement salée (1 à 1,2 % en poids de NaCl) afin d'élever le pH du caillé avant le moulage ; cette adjonction d'eau faiblement salée se fait à un volume égal à 10 % environ du volume du lait transformé en fromage et à une température de 61 °C environ ; elle fait passer l'acidité du lactosérum qui accompagne le caillé avant l'égouttage, d'une valeur traditionnelle de 12,5 à 13° Dornic à une valeur de 7 à 11° Dornic et de préférence, à une valeur de 8 à 10° Dornic après l'adjonction d'eau.

L'effet de ces modifications est d'une part, une amorce de la solubilisation du caillé, d'autre part une action osmotique qui accroît le délactosage du caillé. La température plus élevée de l'emprésurage se traduit par une sélection de germes ; l'adjonction d'eau chaude peu salée provoque une exsudation supplémentaire du caillé, ce qui accélère l'égouttage et un délactosage plus élevé de 10 % à 15 % environ, par rapport au processus traditionnel.

L'amorce, à ce moment, de la solubilisation du caillé se traduit ultérieurement, pendant la pasteurisation effectuée comme expliqué plus haut, par une solubilisation du caillé à peu près complète dont l'effet est comparable à celui de l'affinage traditionnel.

Par conséquent, il est apparu d'une part, que le procédé de l'invention permet de conserver jusqu'à six mois, sans altération nuisible, un fromage obtenu selon le processus classique, d'autre part que ce procédé est tel qu'il peut être intégré au processus de fabrication en remplacement au moins partiel de l'affinage traditionnel, à condition de mettre le caillé dans un état légèrement différent de l'état traditionnel avant la mise en moule.

Ainsi, il devient possible, après l'ensemencement en Penicillium candidum de la surface du caillé moulé et égoutté, et après une période de 9 à 11 jours de développement de la fleur, de traiter directement le fromage selon le procédé décrit plus haut. La suppression de l'affinage traditionnel permet de raccourcir de trois semaines la durée de la fabrication.

En procédant ainsi, avec les modifications décrites plus haut, l'opération de pasteurisation donne un fromage dont on a vérifié qu'il a une texture homogène, bien soudée, avec des qualités organoleptiques développées au maximum, et avec, aussi, la durée la plus longue de la conservation sans altération.

Les modifications décrites plus haut ne sont pas nécessaires, mais il est préférable de les adopter, dans le cadre de l'invention, parce qu'elles permettent d'obtenir le plein effet du procédé au point de vue du raccourcissement de la durée de la fabrication et de la garantie de la meilleure et de la plus longue conservation.

## Revendications

1. Procédé de fabrication et d'emballage d'un fromage à pâte molle et à croûte fleurie ou lavée comprenant les opérations d'emballage dans une feuille, de mise en boîte étanche à fermeture hermétique du fromage ainsi enveloppé, de pasteurisation à une température de 100 °C au moins pendant une durée appropriée du fromage emballé et enfermé dans la boîte étanche, caractérisé en ce qu'on enveloppe le fromage dans un emballage mixte ayant une couche intérieure absorbante de l'humidité du côté du contact avec le fromage et une couche extérieure étanche.

2. Procédé selon la revendication 1 caractérisé en ce qu'on utilise pour l'emballage une première feuille en fibres de cellulose non tissées et une seconde feuille mince en aluminium.

3. Procédé selon la revendication 1 caractérisé en ce qu'on utilise pour l'emballage une feuille composite composée d'une première feuille en fibres de cellulose non tissées et d'une seconde feuille mince en aluminium, ces deux feuilles étant réunies par collage au moyen d'une colle résistante à une température de 130 °C au moins.

4. Procédé selon la revendication 1 caractérisé en ce qu'on exécute l'opération de pasteurisation à une température de 100 °C environ pendant une durée de 50 mn au moins.

5. Procédé selon la revendication 4 comprenant une opération d'adjonction de présure, une adjonction d'eau salée pour élever l'acidité du caillé, une opération de tranchage du caillé avant sa mise en moule pour égouttage, caractérisé en ce qu'on ajoute la présure à une température de 38-39 °C au lieu de la valeur habituelle de 32-34 °C et on ajoute du sel sous forme d'eau faiblement salée (1 à 1,2 % en poids de NaCl) avant l'égouttage pour élever l'acidité à une valeur de 7 à 11° Dornic, de préférence 8 à 10° Dornic, au lieu de la valeur habituelle de 12,5-13° Dornic, afin de provoquer une amorce de la solubilisation du caillé et un accroissement de son délactosage.

6. Procédé selon la revendication 5 caractérisé en ce qu'on ajoute l'eau salée à une température de 61 °C, en quantité égale à 10 % environ du volume du lait traité.

7. Procédé selon la revendication 4 caractérisé en ce que, pendant l'opération de pasteurisation, on maintient la boîte fermée hermétiquement dans un bain d'eau chauffée à 100 °C sur laquelle on établit une pression de 0,5 bar (0,05 MPa) audessus de la pression atmosphérique.

8. Procédé selon la revendication 5 selon lequel on ensemence en Penicillium candidum la surface du caillé moulé et égoutté caractérisé en ce qu'on laisse une période raccourcie ayant une durée de 9 à 11 jours au lieu d'une durée habituelle de 3 semaines au moins pour le développement de la fleur, après quoi on continue par l'emballage, la mise en boîte hermétique et la pasteurisation conformément au procédé selon la revendication 1.

9. Emballage utilisable pour la mise en œuvre du procédé selon la revendication 1 composé d'une feuille composite comprenant une première feuille en fibres de cellulose non tissées et une seconde feuille mince en aluminium réunies par collage caractérisé en ce que la colle est une colle résistante à une température de 130 °C au moins, de préférence à base de caséinate, le poids total de cette feuille composite étant de 35 g/m² environ.

## Claims

1. A process for producing and wrapping a soft cheese with a bloom-bearing or washed rind comprising the operations of wrapping the cheese in a sheet, placing the cheese when thus enclosed in a hermetically sealingly closed box, and pasteurising the cheese when wrapped and enclosed in the sealed box at a temperature of 100 °C at least for a suitable period of time characterised in that the cheese is enclosed in a mixed wrapping having an internal moisture-absorbing layer on the side in contact with the cheese and an external sealing layer.

2. A process according to claim 1 characterised by using for the wrapping a first sheet of non-woven cellulose fibres and a second thin sheet of aluminium.

3. A process according to claim 1 characterised by using for the wrapping a composite sheet made up of a first sheet of non-woven cellulose fibres and a second thin sheet of aluminium, said two sheets being joined by glueing by means of a glue which is resistant to a temperature of 130 °C at least.

4. A process according to claim 1 characterised by carrying out the pasteurisation operation at a temperature of 100 °C approximately for a period of time of 50 minutes at least.

5. A process according to claim 4 comprising an operation of adding rennet, adding salt water to raise the acidity of the curds, and an operation of cutting the curds before it is put into a mould, for draining, characterised in that the rennet is added at a temperature of 38-39 °C instead of the usual value of 32-34 °C and salt is added in the form of weakly salt water (1 to 1.2 % by weight of NaCl) before the draining operation to raise the level of acidity to a value of 7 to 11° Dornic, preferably 8 to 10° Dornic, instead of the usual value of 12.5-13° Dornic, in order to cause the beginning of solubilisation of the rennet and an increase in the delactosation thereof.

6. A process according to claim 5 characterised by adding the salt water at a temperature of 61 °C in an amount equal to 10 % approximately of the volume of the treated milk.

7. A process according to claim 4 characterised in that, during the pasteurisation operation, the hermetically closed box is kept in a bath of water heated at 100 °C, on which there is established a pressure of 0.5 bar (0.05 MPa) above atmospheric pressure.

8. A process according to claim 5 wherein the surface of the moulded and drained rennet is seeded with Penicillium candidum characterised by leaving a shortened period of a duration of 9 to 11 days instead of the usual duration of 3 weeks at least for development of the bloom, whereafter the process continues with wrapping, placing the cheese in the hermetic box and pasteurisation in accordance with the process as set forth in claim 1.

9. A wrapping which can be used for carrying out the process according to claim 1 composed of a composite sheet comprising a first sheet of non-woven cellulose fibres and a second thin sheet of aluminium, which are joined by glueing characterised in that the glue is a glue which is resistant to a temperature of 130 °C at least, preferably on a caseinate base, the total weight of said composite sheet being approximately 35 g/m².

## Patentansprüche

1. Verfahren zur Herstellung und Verpackung eines Weichkäses mit gewachsener oder gewaschener Rinde, das die Vorgänge der Verpackung in einem Blatt, des Einbringens des auf diese Weise umhüllten Käses in eine dichte Packung mit hermetischem Abschluss, und der Pasteurisierung des verpackten und in der dichten Packung abgeschlossenen Käses bei einer Temperatur von 100 °C während zumindest einer ausreichenden Dauer umfasst, dadurch gekennzeichnet, dass der Käse in eine kombinierte Verpackung eingehüllt wird, die an der in Anlage mit dem Käse liegenden Seite eine feuchtigkeitsabsorbierende Innenschicht aufweist, sowie eine dichte Aussenschicht.

2. Verfahren nach Anspruch 1, dadurch gekennzeichnet, dass man für die Verpackung ein erstes Blatt aus nicht-gewebten Zellulosefasern und ein zweites dünnes Blatt aus Aluminium verwendet.

3. Verfahren nach Anspruch 1, dadurch gekennzeichnet, dass man für die Verpackung eine Verbundfolie verwendet, die aus einer ersten Folie aus nicht-gewebten Zellulosefasern und einer zweiten dünnen Aluminiumfolie besteht, und dass diese beiden Folien mittels eines Klebstoffs verbunden sind, der mindestens bis zu einer Temperatur von 130 °C beständig ist.

4. Verfahren nach Anspruch 1, dadurch gekennzeichnet, dass der Pasteurisierungsvorgang bei einer Temperatur von ungefähr 100 °C während mindestens einer Dauer von 50 Minuten durchgeführt wird.

5. Verfahren nach Anspruch 4, das eine Zugabe von Kälberlab, eine Zugabe von Salzwasser zur Erhöhung der Azidität der sauren Milch, und einen Abteilvorgang der sauren Milch vor seiner Eingabe in eine Form zum Abtropfenlassen umfasst, dadurch gekennzeichnet, dass die Zugabe des Kälberlabs bei einer Temperatur von 38 bis 39 °C anstelle des üblichen Wertes von 32 bis 34 °C erfolgt, und dass das Salz als schwach gesalzenes Wasser (1 bis 1,2 Gew.% NaCl) vor dem Abtropfenlassen zugegeben wird, um die Azidität auf einen Wert von 7 bis 11° Dornic und vorzugsweise 8 bis 10° Dornic zu erhöhen, anstelle des üblichen Wertes von 12,5 bis 13° Dornic, um den Beginn des Löslichmachens der sauren Milch zu veranlassen, sowie eine Erhöhung der Milchzuckerspaltung derselben.

6. Verfahren nach Anspruch 5, dadurch gekennzeichnet, dass das Salzwasser mit einer Temperatur von 61 °C zugegeben wird und zwar in einer Menge, die ungefähr 10 Vol.% der behandelten Milch entspricht.

7. Verfahren nach Anspruch 4, dadurch gekennzeichnet, dass man während des Pasteurisierungsvorganges die hermetisch abgeschlossene Packung in einem auf 100 °C aufgeheizten Wasserbad hält, auf das ein um 0,5 bar (0,05 MPa) über dem atmosphärischen Druck liegender Druck aufrecht erhalten wird.

8. Verfahren nach Anspruch 5, gemäss welchem die Oberfläche der geformten und abgetropften sauren Milch mit Penicillium candidum behandelt wird, dadurch gekennzeichnet, dass man für die Entwicklung der Bildschicht eine verkürzte Zeitspanne mit einer Dauer von 9 bis 11 Tagen anstelle der gewöhnlichen von mindestens 3 Wochen vorsieht, worauf man mit der Verpackung, dem Einbringen in die hermetische Packung und dem Pasteurisieren entsprechend dem Verfahren nach Anspruch 1, fortfährt.

9. Verpackung, die sich zur Durchfürung des Verfahrens nach Anspruch 1 eignet und die aus einer Verbundfolie besteht, die eine erste Folie aus nicht-gewebten Zellulosefasern und eine zweite dünne Aluminiumfolie aufweist, die durch Verkleben verbunden sind, dadurch gekennzeichnet, dass der Klebstoff zumindest bis zu einer Temperatur von 130 °C beständig ist und vorzugsweise ein Klebstoff auf Kaseinbasis ist, und das Gesamtgewicht der Verbundfolie etwa 35 g/m² beträgt.